# EUROPEAN PATENT SPECIFICATION

(11) **EP 0 479 473 B1**
(45) Date of publication and mention of the grant of the patent: **14.02.1996**
(21) Application number: 91308688.0
(22) Date of filing: 24.09.1991
(51) Int. Cl.: G11B 7/085

(54) **Apparatus for and method of counting the number of tracks on an optical disk**
Gerät und Verfahren zum Zählen der Anzahl von Spuren auf einer optischen Scheibe
Appareil et méthode pour compter le nombre de pistes sur un disque optique

(30) Priority: 27.09.1990 JP 255466/90
(43) Date of publication of application: 08.04.1992
(73) Proprietor: International Business Machines Corporation, Armonk, N.Y. 10504 (US)
(72) Inventor: Kagami, Naoyuki, Shounanlifetown, Fujisawa-shi, Kanagawa-ken (JP); Kubo, Hiroaki, Atsugi-shi, Kanagawa-ken (JP); Okada, Keiichi, Greenhill Aizawa 202, Seya-ku, Yokohama-shi, Kanagawa-ken (JP)
(74) Representative: Burt, Roger James, Dr.

(56) References cited:
- EP-A- 0 277 793
- EP-A- 0 301 108
- EP-A- 0 352 131
- EP-A- 0 363 022
- US-A- 4 285 015
- PATENT ABSTRACTS OF JAPAN vol. 13, no. 239 (P-879) 6 June 1989
- PATENT ABSTRACTS OF JAPAN vol. 011, no. 256 (P-607) 20 August 1987

## Description

This present invention relates to optical disk drive apparatus, and particularly to apparatus for and a method for counting the number of tracks crossed by the optical head during a seek operation in an optical disk drive.

In an optical disk drive, during a seek operation an optical head moves a laser beam over the tracks of an optical disk from a current position to a target position (or a target track). The number of tracks crossed by the laser beam during the seek operation can be counted by monitoring a TES (Tracking Error Signal) to obtain positional information relating to the moving optical head.

There are several optical methods for generating a TES. These include the well-known push-pull and three-beam methods. The TES generated by such methods has a waveform with a positive peak and a negative peak occurring alternately each time a laser beam crosses a land part and a groove part of an optical disk. The TES has a zero level when the laser beam passes through the centre of the land part and the centre of the groove part.

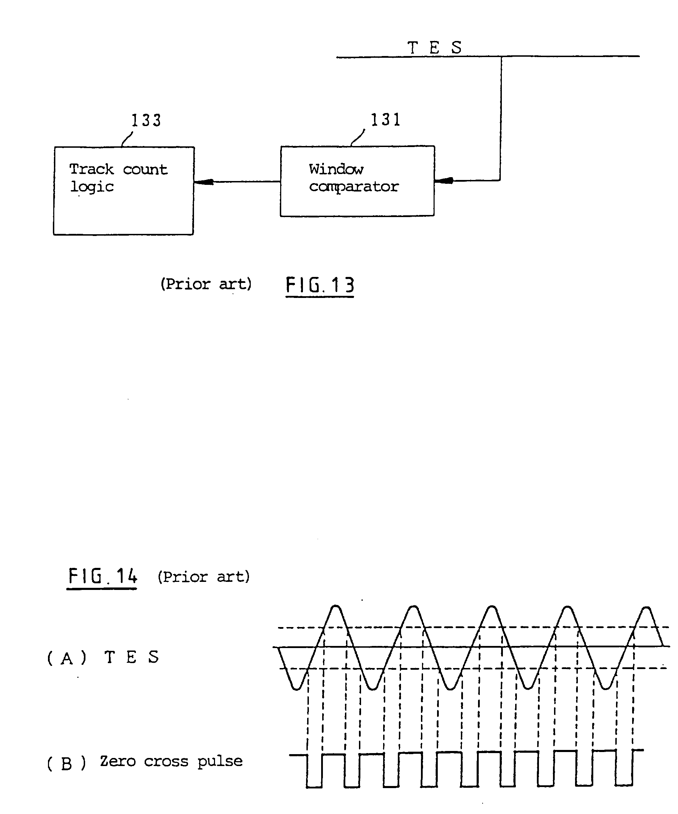

As shown in Figures 13 and 14, an example of conventional circuit for counting tracks from the TES comprises a window comparator to generate a zero cross pulse if the TES is within predetermined range of the zero level and track count logic to count the number of the zero cross pulses.

On the recording surface of the optical disk, the positional information corresponding to a data recording part is usually written immediately before the data recording part in pre-pitted form. However, if the pre-pitted portion contains defects, noise is generated in the TES when the laser beam crosses the pre-pitted portion. The conventional circuit hereinbefore described responds to such noise by generating an error in the number of tracks counted.

In accordance with the present invention, there is now provided an optical disk drive apparatus comprising: an optical head for projecting a laser beam onto the recording surface of an optical disk compatible with the apparatus; seek control means for moving the beam from a current track on the disk to a target track; tracking error signal generating means for generating a tracking error signal (TES), the TES indicating the deviation of the beam from the centre of a track in the radial direction of the disk; and tracking number counting means for counting, as a function of the TES, the number of tracks crossed by the optical head; characterised in that the tracking number counting means comprises: peak detection means for generating a positive peak pulse when the TES is higher than a predetermined positive level and for generating a negative pulse when the TES is lower than a predetermined negative level; and logic means for generating an output pulse in response to the positive peak pulse and the negative peak pulse being generated in a predetermined sequence.

This advantageously ensures that the number of tracks is precisely counted even if a defect portion or a pre-pitted portion which causes a noise is on the recording surface of an optical disk or a noise is caused by other sources.

In a preferred embodiment of the present invention, there is provided a positive peak level comparator for generating a positive peak pulse when a TES (Tracking Error Signal) is higher than a predetermined positive level, a negative peak level comparator for generating a negative peak pulse when the TES is lower than a predetermined negative level, and a logic circuit for generating an output pulse when the positive peak pulse and the negative peak pulse have been alternately inputted thereto, this prevents the TES from being miscounted even if the TES is disturbed, for example, noise at either the predetermined positive level or the predetermined negative level and either the peak pulse or the negative pulse is successively generated.

In a particularly preferred embodiment of the present invention, there is provided a filter circuit for passing the tracking error signal of high frequency (generated during a high-velocity seek operation) with high gain and, passing the tracking error signal of low frequency (generated during a low-velocity seek operation) with low gain, a positive peak level comparator for generating a positive peak pulse when an output signal from the filter circuit is higher than a predetermined positive level, a negative peak level comparator for generating a negative peak pulse when an output signal from the filter circuit is lower than a predetermined negative level, and a logic circuit for generating an output pulse when the positive peak pulse and the negative peak pulse have been alternately inputted, this prevents the TES from being miscounted by the decrease of the amplitude of TES which is produced caused if the laser beam crosses a defect portion on the disk during a high-velocity seek operation.

A preferred embodiment of the present invention comprises a first positive peak level comparator for generating a positive peak pulse when the tracking error signal is higher than a predetermined first positive level, a first negative peak level comparator for generating a negative peak pulse when the tracking error signal is lower than a predetermined first negative level, a second positive peak level comparator for generating a positive peak pulse when the tracking error signal is higher than a predetermined second positive level lower than the predetermined first positive level, a second negative peak level comparator for generating a negative peak pulse when the tracking error signal is lower than a predetermined second negative level higher than the predetermined first negative level, and a logic circuit for generating an output pulse when the positive peak pulse and the negative peak pulse have been alternately inputted from the first positive peak level comparator and the first negative peak level comparator, respectively, during a low-velocity seek operation and generating an output pulse when the positive peak pulse and the negative peak pulse have been alternately inputted from the second positive peak level comparator and the second negative peak level comparator, respectively, during a high-velocity seek operation, this prevents the TES from being miscounted by the decrease of the amplitude of TES which is produced if a laser beam crosses a defect portion on the disk during a high-velocity seek operation.

Preferred embodiments of the present invention may include a window comparator for generating a zero cross pulse when the tracking error signal is within a predetermined range including a zero level, a positive peak level comparator for generating a positive peak pulse when the tracking error signal is higher than a predetermined positive level, a negative peak level comparator for generating a negative peak pulse when the tracking error signal is lower than a predetermined negative level, and a logic circuit for generating an output pulse when the zero cross pulse, the positive peak pulse, and the negative peak pulse have been inputted in predetermined order. This prevents the TES from being miscounted even if the TES is disturbed by for example, noise at a level close to either the predetermined positive level or the predetermined negative level and either the peak pulse or the negative pulse is successively generated, or if the TES is disturbed the predetermined range including the zero level is exceeded.

In an especially preferred embodiment of the present invention, there is provided a window comparator for generating a zero cross pulse when the tracking error signal is within a predetermined range including a zero level, a positive peak level comparator for generating a positive peak pulse when the tracking error signal is higher than a predetermined positive level, a negative peak level comparator for generating a negative peak pulse when the tracking error signal is lower than a predetermined negative level, and a logic circuit for generating an output pulse when the positive peak pulse and the negative peak pulse have been alternately inputted from the positive peak level comparator and the negative peak level comparator, respectively, during a low-velocity seek operation and generating an output pulse when a zero cross pulse has been inputted from the window comparator during a high-velocity seek operation. This substantially eliminates the effect of noise caused by a defect portion etc with no use of the window comparator for generating the zero cross pulse if a seek operation is performed at a low velocity.

Preferred embodiments of the present invention may include a window comparator for generating a zero cross pulse when the tracking error signal is within a predetermined range including a zero level, a filter circuit for passing the tracking error signal of high frequency with high gain and for passing the tracking error signal of low frequency with low gain, a positive peak level comparator for generating a positive peak pulse when an output signal from the filter circuit is higher than a predetermined positive level, a negative peak level comparator for generating a negative peak pulse when an output signal from the filter circuit is lower than a predetermined negative level, and a logic circuit for generating an output pulse when the zero cross pulse, the positive peak pulse, and the negative peak pulse have been inputted in predetermined order. This relatively amplifies the amplitude of TES in the filter circuit so as to reduce the effect of the reduce in the amplitude of TES which occurs during a high-velocity seek operation.

Particularly preferred embodiments of the present invention may include a window comparator for generating a zero cross pulse when the tracking error signal is within a predetermined range including a zero level, a pulse discriminator for generating a discriminated zero cross pulse in response to the zero cross pulse whose time width is greater than or equal to a predetermined value, a filter circuit for passing the tracking error signal of the high frequency with high gain and, for passing the TES of the low frequency with low gain, a positive peak level comparator for generating a positive peak pulse when an output signal from the filter circuit is higher than a predetermined positive level, a negative peak level comparator for generating a negative peak pulse when an output signal from the filter circuit is lower than a predetermined negative level, and a logic circuit for generating an output pulse when the discriminated zero cross pulse, the positive peak pulse, and the negative peak pulse have been inputted in predetermined order during a low-velocity seek operation for generating an output pulse when the positive peak pulse and the negative peak pulse have been alternately inputted during a high-velocity seek operation, to decrease or increase the levels detected by the level comparators which detect the positive peak and a negative peak of TES if the seek operation of the optical head is at a high or low velocity, respectively, by filters placed ahead of the level comparator, in which the gain decreases as the frequency decreases. This prevents tracks from being miscounted by the decrease of the amplitude of TES by a disturbance during a period of high seek velocity and by a noise within TES during a period of low seek velocity, because the pulse discriminator is preceded by the window comparator detecting a zero cross of TES, in which a pulse with short time width is not regarded as a pulse.

Preferred embodiments of the present invention will now be described with reference to the accompanying drawings in which-

Figure 1 is a block diagram showing a part of an embodiment of an optical disk drive apparatus concerning this invention.

Figure 2 is a perspective view showing another part of the embodiment.

Figure 3 is a graph showing a velocity profile of the embodiment.

Figure 4 is a plan view showing the trajectory of a laser beam on an optical disk during a high-velocity seek operation.

Figure 5 shows charts showing the waveforms of a TES, a TES which has passed through a high-pass filter, a positive peak pulse, and a negative peak pulse during a high-velocity seek operation.

Figure.6 shows charts of the waveforms of a TES, a zero cross pulse, a discriminated zero cross pulse, a positive peak pulse, and a negative peak pulse during a low-velocity seek operation.

Figure 7 to Figure.11 are block diagrams showing other embodiments different from one another.

Figure 12 shows charts of the waveforms of a TES and a TCS with respect to the structure of an optical disk.

Figure 13 is a block diagram showing the structure of a conventional track number counting means.

Figure 14 shows waveform charts representing the fundamental of operation in the conventional means.

Figure 15 is a plan view showing the trajectory of a laser beam on an optical disk during a low-velocity seek operation.

Figure 16 shows waveform charts representing a failure in counting the number of tracks in the conventional means.

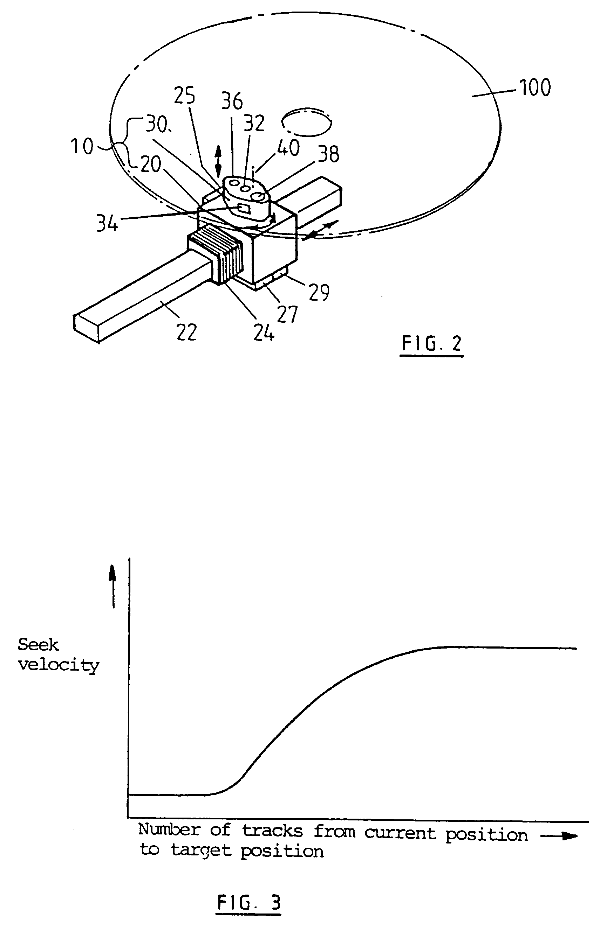

Referring to Figure 2, an optical disk drive of the present invention comprises an optical head 10 composed of a coarse actuator 20 and a fine actuator 30. The coarse actuator 20 is supported by a rail 22 so that it can move freely in the radial direction of an optical disk 100 (in the direction of a seek operation), and is driven in the direction of the seek operation by a coarse actuator VCM(Voice Coil Motor) 24. The fine actuator 30 is supported by the coarse actuator 20 through a shaft 32 so that it can move in focusing and tracking directions and is driven in the focusing and tracking directions by a focus VCM 34 and a tracking VCM 36, respectively. The fine actuator 30 has a fixed objective lens 38 from which a laser beam 40 is projected onto the optical disk 100 the coarse actuator 20 is provided with a relative position error (RPE) detecting sensor 25, a focus error signal (FES) detecting sensor 27, and a tracking error signal (TES) detecting sensor 29. The relative position error (RPE) detecting sensor 25, which is, for example, a photo sensor with two split sensitive parts, detects the quantity of a relative deflection (rotational deflection from a neutral position) of the fine actuator 30 from the coarse actuator 20. The focus error signal (FES) detecting sensor 27, which is, for example, a photo sensor with four split sensitive parts detects a positional difference of a spot of the laser beam 40 from a focusing point on the optical disk 100. The tracking error signal (TES) detecting sensor 29 which is, for example, a photo sensor with two split sensitive parts, detects a positional difference of a spot of the laser beam 40 from the centre of a track on the optical disk 100.

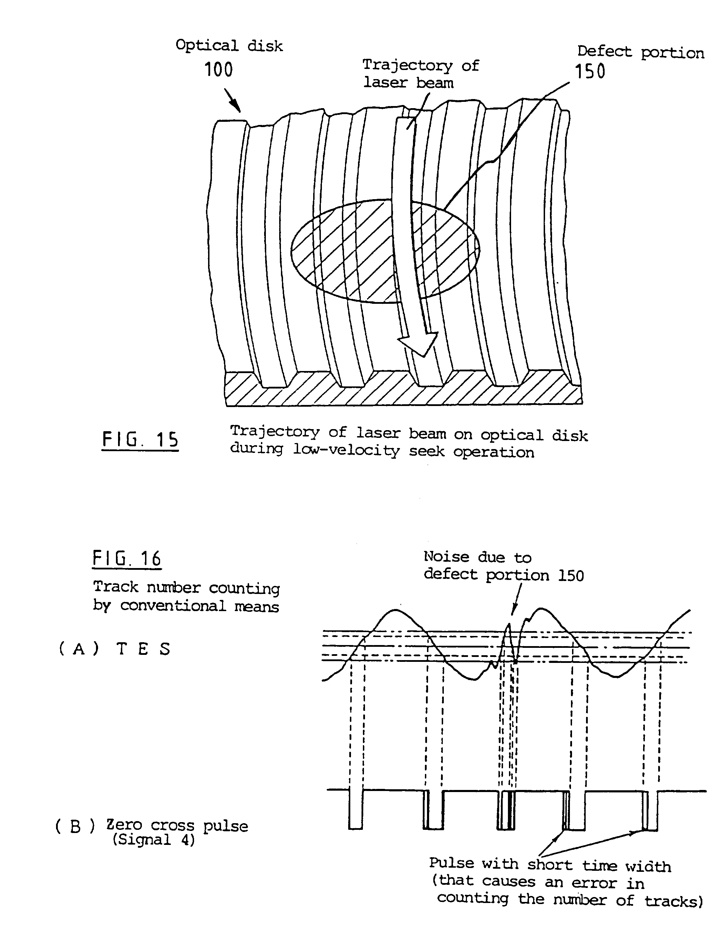

Referring to Figure 15, as mentioned earlier the trajectory of the laser beam during a low-velocity seek operation may cross a defect portion 150. The defect portion 150 usually spans more than one track on the recording surface of the optical disk 100. Accordingly if a seek velocity is low, the laser beam passes through the defect portion 150 as it passes through one land part 110 and one groove part 120. This causes noise within a TES, as shown in Figure.16. Said noise thus generated cause a pulse and thus count errors in counting the number of tracks by a track count logic 133. The same problem may also be encountered if a laser beam passes through a pre-pitted portion. Further, other forms of noise cause counting errors.

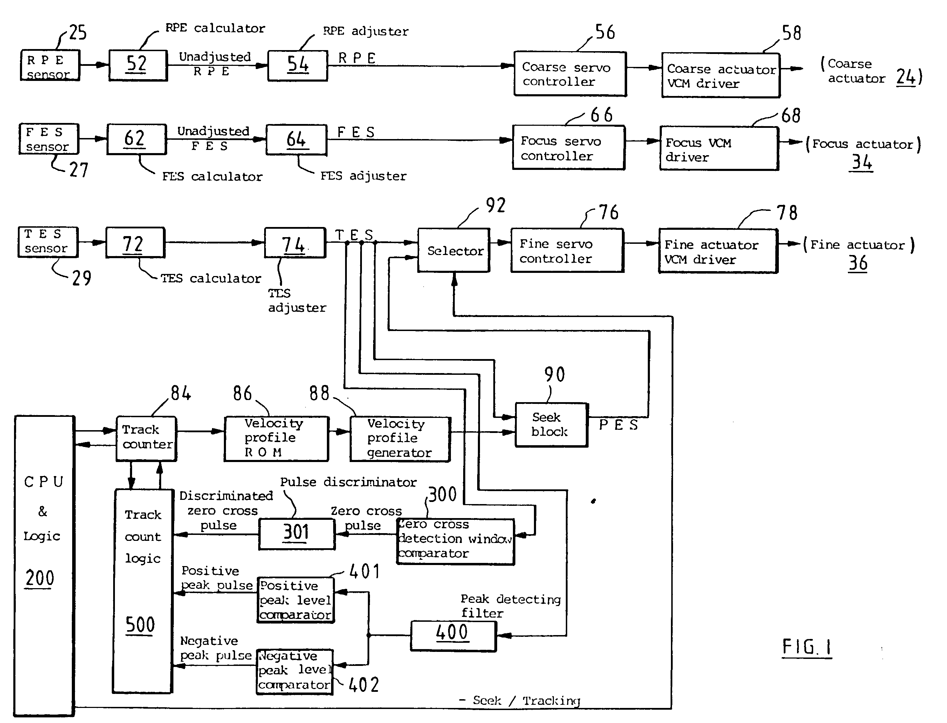

Referring to Figure 1, the output of the relative position error (RPE) detecting sensor 25 is connected to a RPE calculator 52. The RPE calculator 52, calculates the difference between signals from the two photo-sensitive parts of the RPE detecting sensor 25 and outputs an unadjusted or raw RPE. The gain or offset of unadjusted RPE is adjusted by a RPE adjuster 54. The adjusted RPE thus obtained is provided to a coarse servo controller 56 and a tracking servo controller 76.

The RPE to which low-pass filtering and compensation for phase lead have been applied by the coarse servo controller 56, is provided to a coarse actuator VCM driver 58 from which driving current according to the amplitude and sign of the RPE, that is, the quantity and direction of the deflection of the fine actuator 30 relative to the coarse actuator 20 is provided to the coarse actuator VCM 24.

The output of the FES detecting sensor 27 is connected to a FES calculator 62. The FES calculator 62, calculates the difference between a sum of detecting signals from one pair of two photo sensitive parts of the FES detecting sensor 27 and a sum of detecting signals from the other pair of two photo-sensitive parts and outputs an unadjusted or raw FES. The offset of the unadjusted FES is adjusted by a FES adjuster 64, the FES thus obtained is provided to a focus servo controller 66.

The FES to which low-pass filtering and compensation for phase lead have been applied by the focus servo controller 66 is provided to a focus VCM driver 68 from which driving current according to the amplitude and sign of the FES, that is, the positional difference and direction of a spot of the laser beam 40 from the focus point is provided to the focus VCM 34.

The output of tlie TES detecting sensor 29 is connected to a TES calculator 72. The TES calculator, calculates the difference between detecting signals from the two photo sensitive parts of the TES detecting sensor 29 to output an unadjusted or a raw TES. When the gain and offset of the unadjusted TES are adjusted by the TES adjuster 74. The TES thus obtained is provided to the tracking servo controller 76, a tracking VCM driver 78 providing a driving signal for tracking to the tracking VCM 36.

The adjusted TES is also connected to a window comparator 300 for zero cross detection in which a TES is checked to see whether the TES is within a predetermined range including a reference level (zero level). A zero cross pulse is outputted only if the TES is within the range. As is obvious from the above, the window comparator 300 is used to detect whether the TES has crossed the zero level.

The zero cross pulse is connected to a pulse discriminator 301. The pulse discriminator 301 is a digital low-pass filter that only outputs a pulse with time width greater than or equal to a predetermined value within zero cross pulses. The pulse outputted from the pulse discriminator 301 will be called hereafter a discriminated zero cross pulse. The discriminated zero cross pulse is inputted to track count logic 500 that generates an output pulse, or counts the number of tracks only if predetermined pulses are inputted in predetermined order.

The adjusted TES is also connected to a filter circuit (peak detecting filter) 400. The filter circuit 400 is a high-pass filter for passing the TES of high frequency with high gain and passing the TES of low frequency with low gain. In other words, the filter circuit 400 causes the amplitude of TES during a low-velocity seek operation in which the optical head 10 (that is, a beam spot) crosses tracks at a low velocity to become smaller than the amplitude of TES during a high-velocity seek operation. The output signal from the filter circuit 400 will be called hereafter a peak detection track cross signal to distinguish it from the TES.

The peak detection track cross signal is connected to a positive peak level comparator 401 in which the peak detection track cross signal is compared with a constant value close to a positive peak. The peak detection track cross signal is also connected to a negative peak level comparator 402 in which the peak detection track cross signal is compared with a constant value close to a negative peak. The positive peak pulse and the negative peak pulse from the positive peak level comparator 401 and the negative peak level comparator 402, respectively, are connected to the track count logic 500.

The track count logic 500 functions in a high-velocity mode and a low-velocity mode. In high-velocity mode, an output pulse is generated if the positive peak pulse and the negative peak pulse have been alternately inputted. In low-velocity mode, an output pulse is generated if the positive peak pulse, the discriminated zero cross pulse, and the negative peak pulse have been inputted in this order. Each time the track count logic 500 outputs an output pulse, the content of a track counter 84 is decreased by one. Accordingly, the track counter 84 is decreased when the positive peak pulse transits to the negative peak pulse and vice versa in high-velocity mode. The track counter 84 is also decreased when the positive peak pulse, the negative peak pulse, and the discriminated zero cross pulse transit in the predetermined order in low-velocity mode.

The track count logic 500 is switched from high-velocity mode to low-velocity mode and vice versa by a servo system controller (CPU and logic circuit) 200. The controller 200 can determine whether a current seek velocity is high or low, based on positional information as well as velocity information obtained from the TES, or the content of the track counter 84. The seek velocity can be determined based on the content of the track counter 84 because the relationship between the seek velocity and the number of tracks is indicated by a velocity profile ROM 86 so far as the seek velocity is under the control of the velocity profile ROM 86.

The controller 200 is provided with the velocity profile ROM 86 in which information used for controlling the seek velocity, for example, the relation between a track distance from a current position to a target position and a desirable velocity, as in Figure.3, used for controlling the seek velocity is stored. When information about the current position is provided based on the value of the track counter 84, the velocity profile ROM 86 outputs a desirable velocity, in the form of a digital value, at the current position to a velocity profile generator 88 in which the digital value is converted to an analog value. The analog value is connected to a seek block 90. The seek block 90 compares the value obtained from the velocity profile generator 88 with the current velocity information conveyed by the TES to produce a positioning error signal (PES) which is an integrated value of the result of comparison. The PES and the TES are connected to a selector 92. In seek operation mode, the selector 92 provides the PES to the fine servo controller 76. In tracking operation mode, the selector 92 provides the TES to the fine tracking servo controller 76. In seek operation mode, the selector 92 may provide PES to the fine tracking servo controller 76 and the coarse servo controller 56.

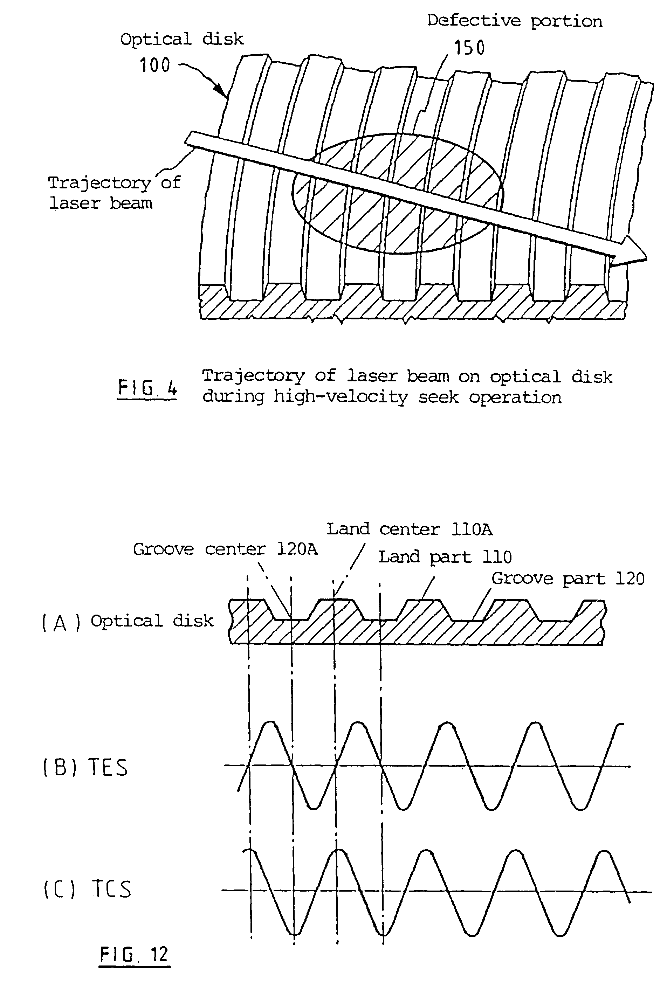

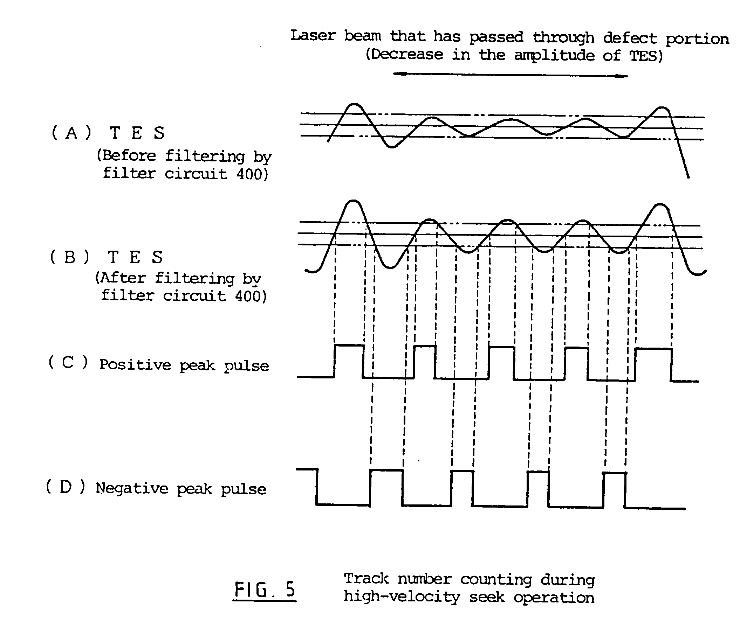

Figure.4 shows the trajectory of the laser beam on the optical disk 100 during a high-velocity seek operation. The laser beam crosses more than one track in a defect portion 150. As shown on Figure 5, the defect portion 150 causes the amplitude of TES to decrease as a laser beam moves across the disc. The amplitude of TES therefore does not reach the reference levels of the level comparators 401 and 402. However, in this embodiment, the TES is relatively amplified during a high-velocity seek operation by the filter circuit 400 at the input to the level comparators 401 and 402, so that the positive and negative peak pulses can be detected. The amplitude of TES is relatively amplified only during a high-velocity seek operation, because the defective portion 150 decreases the amplitude of TES only during the high-velocity seek operation. Amplification of the TES during a low-velocity seek operation results in a decrease in the reference levels of the level comparators 401 and 402 and thus makes them more responsive to noise. During the high-velocity seek operation, the content of the track counter 84 is decreased only when a positive peak pulse and a negative peak pulse have been alternately generated.

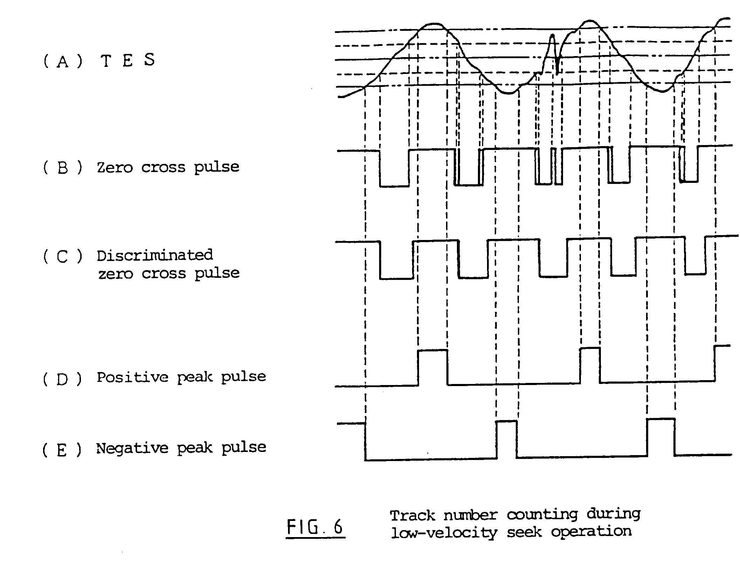

Referring now to Figure 16, during the low-velocity seek operation, the defective portion 150 generates noise in the TES that exceeds the window level (reference range) of the window comparator 300. The TES containing such noise, as shown in Figure.6, causes a pulse with short time width in a zero cross pulse. However, such a pulse is removed from the zero cross pulse by the pulse discriminator 301. A discriminated zero cross pulse is generated, as shown in Figure.6, by the pulse discriminator. During the low-velocity seek operation, the track count logic 500 may decrease the content of the track counter 84 in response to only the discriminated zero cross pulse. However, in this embodiment of the present invention, to count the number of tracks with high accuracy, the track count logic 500 decreases the content of the track counter 84 in response to the generation of three types of pulses, a positive peak pulse, a negative peak pulse, and a discriminated zero cross pulse in a predetermined order by means of the level comparators 401 and 402. The pulse discriminator 301 is used only during the low-velocity seek operation because if the pulse discriminator 301 is used in a high-velocity seek operation, the window comparator 300 would generate only a pulse with short time width and the output from the pulse discriminator 301 would remain at a zero level.

At the start of the seek operation, the number of tracks from the seek start position to the target position is stored in the track counter 84. The stored value is decreased by subtraction for each track crossing during the seek operation. The seek velocity is determined based on the value stored in the track counter 84 by reference to a velocity profile (Figure.3) in the velocity profile ROM 86.

For a short time after the seek operation starts, as is obvious from the velocity profile (Figure.3), the seek operation is performed at high velocity. During such a high-velocity seek operation, the track count means are in high-velocity mode in which a count is made based on transition in the states of a positive peak pulse and a negative peak pulse. If the controller 200 detects that the value contained in the track counter 84 is a predetermined value when the seek operation is nearly completed, the controller 200 changes the track count means from high-velocity mode to low-velocity mode in which a count is made based on transition in the states of a positive peak pulse, a negative peak pulse, and a discriminated zero cross pulse. The peak detecting filter 400 is tuned in such a manner that the detection levels of the positive peak and the negative peak are equivalently decreased during the high-velocity seek operation and are increased during the low-velocity seek operation to always generate positive and negative pulses. Further, the pulse discriminator 301 generates a zero cross pulse independent of noise.

In this embodiment of the present invention, a pulse with short time width caused by noise can be removed by the pulse discriminator 301. However, it will be recognised that noise may be removed directly from the TES by placing the low-pass filter ahead of the window comparator 300 instead of using the pulse discriminator 301.

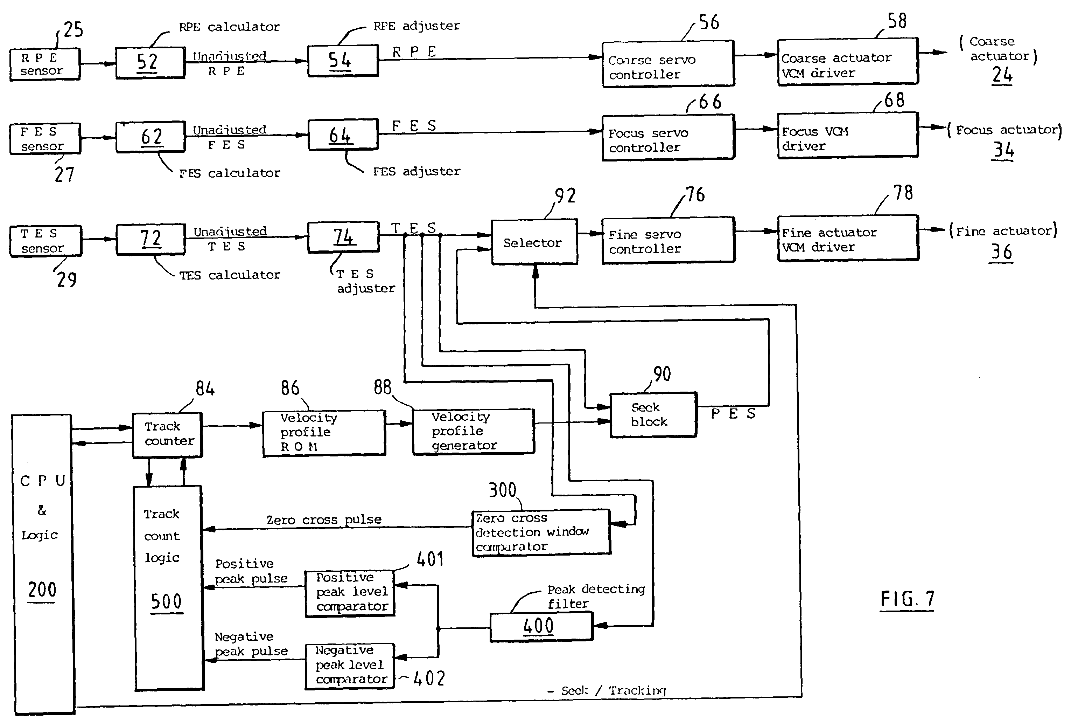

It will be appreciated that if the pulse discriminator 301 or the low-pass filter are not used, as shown in Figure.7, the number of tracks may be counted based on a zero cross pulse, a positive peak pulse, and a negative peak pulse during the high-velocity seek operation, and on a positive peak pulse and a negative peak pulse during the low-velocity seek operation.

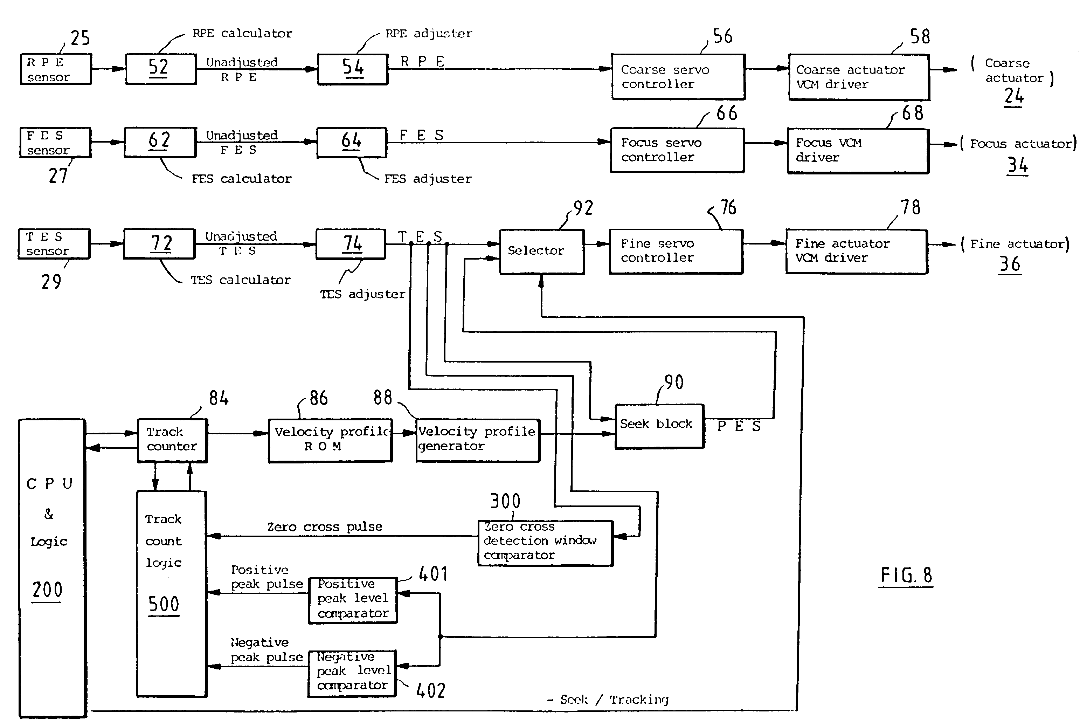

It will also be appreciated that if the filter circuit 400 is not used, as shown in Figure.8, the number of tracks may be counted based on a zero cross pulse during the high-velocity seek operation and on a positive peak pulse and a negative peak pulse during the low-velocity seek operation.

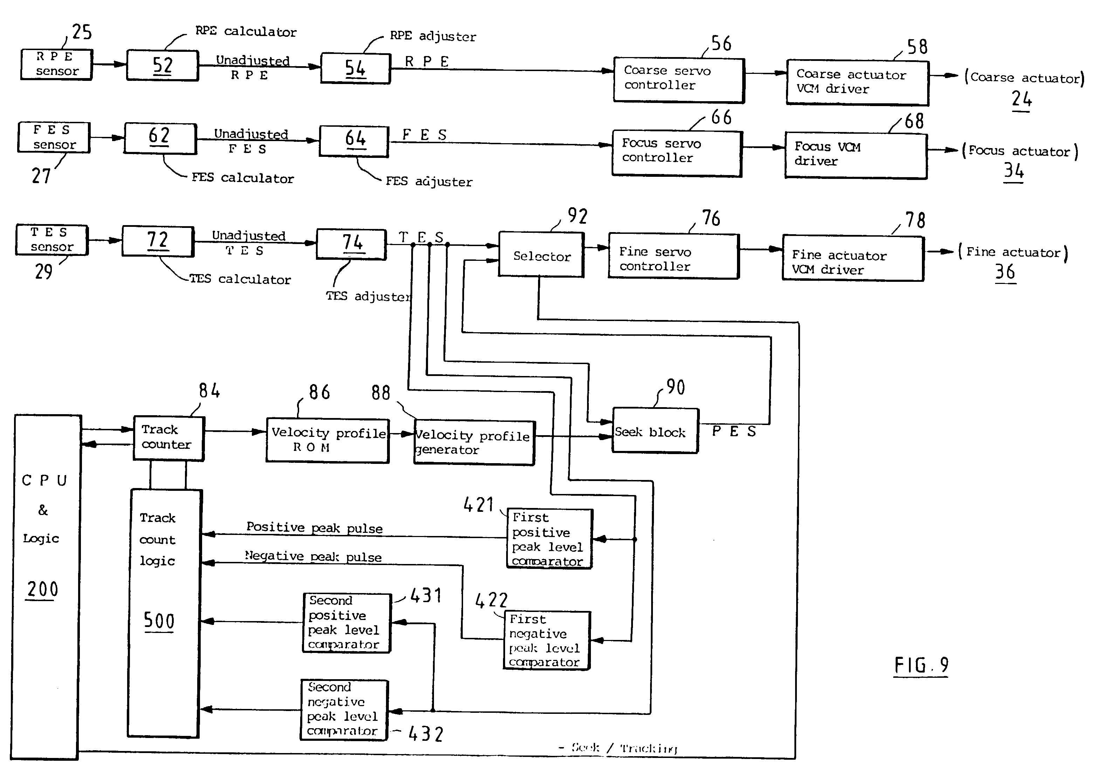

As shown in Figure 9, a first positive peak level comparator 421 generates a positive peak pulse when the TES is above a predetermined first positive level. A first negative peak level comparator 422 generates a negative peak pulse when the TES is below a predetermined first negative level. A second positive peak level comparator 431 generates a positive peak pulse when the TES is above a predetermined second positive level lower than the predetermined first positive level. A second negative peak level comparator 432 generates a negative peak pulse when the TES is below a predetermined second negative level higher than the predetermined first negative level. The number of tracks may be counted during the low-velocity seek operation if the positive peak pulse and the negative peak pulse have been alternately inputted from the first positive peak level comparator 421 and negative peak level comparator 422, respectively. The number of tracks may be counted during the high-velocity seek operation if the positive peak pulse and negative peak pulse have been alternately inputted from the second positive peak level comparator 431 and negative peak level comparator 432, respectively. Instead of using the filter circuit 400 to equivalently vary the detection levels of the positive and negative peak pulses in accordance with the frequency of the inputted TES, the levels to be compared may be varied according to seek velocity information or a stored value in the track counter 84.

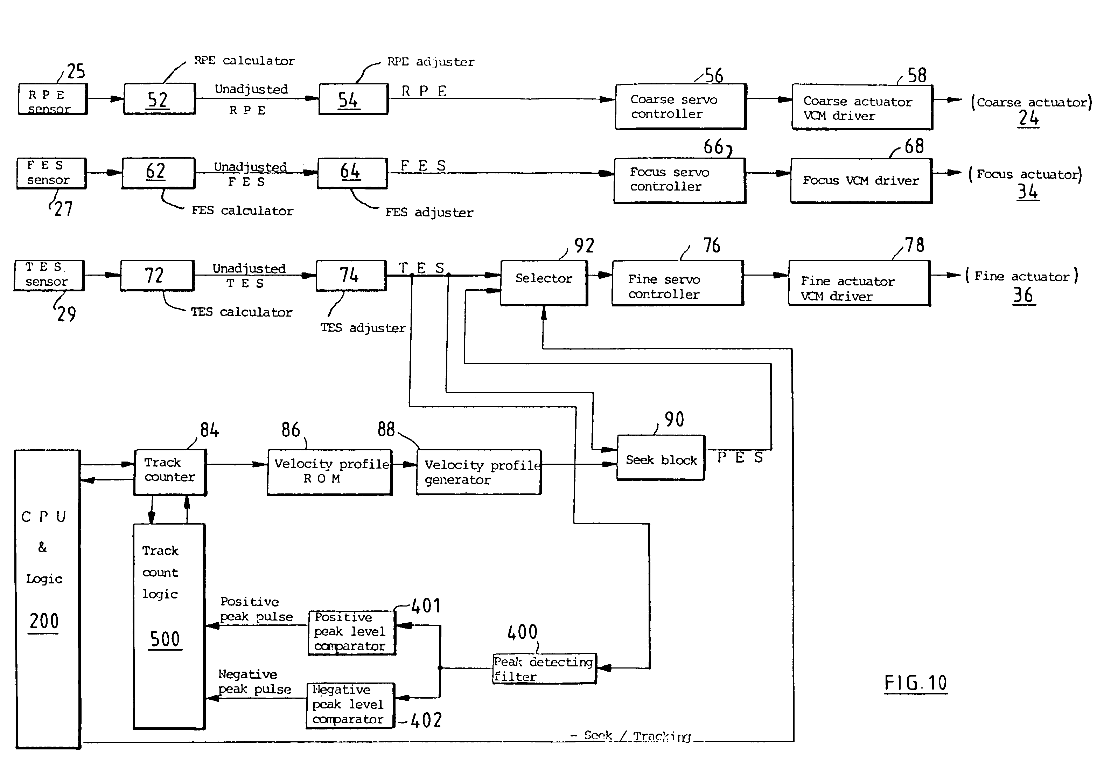

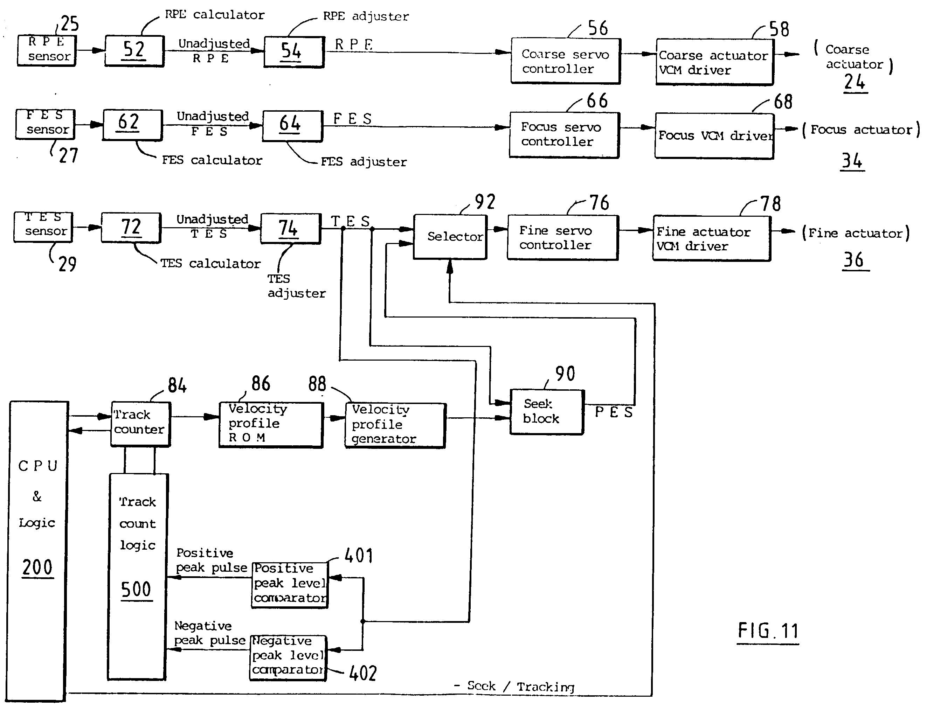

It will further be appreciated that the number of tracks may be counted, as shown in Figure.10, based on two types of pulses, a positive peak pulse and a negative peak pulse whether the seek operation is performed at a high velocity or a low velocity and further, as shown in Figure.11, without using the filter circuit 400.

In this embodiment of the present invention, a TES indicating the deviation of a beam from the centre of a track in the radial direction of the disk has been described as a TES shown in Figure.12(B). However, it will be appreciated that a signal shown in Figure.12(C) may be used as a signal indicating the deviation. The signal shown in Figure.12(C) is sometimes called a TCS (Track Cross Signal). As is obvious from the figure, the respective polarities of the TCS corresponding to the land part 110 and the groove part 120 are opposite to each other.

It will now be appreciated that, in accordance with the present invention, even if there is a defect portion or a pre-pitted portion on the recording surface of an optical disk or undesired noise is generated by other sources, the number of tracks can be precisely counted.

## Claims

1. Optical disk drive apparatus comprising:
an optical head for projecting a laser beam onto the recording surface of an optical disk compatible with the apparatus;
seek control means (90) for moving the beam from a current track on the disk to a target track;
tracking error signal generating means (72) for generating a tracking error signal (TES), the TES indicating the deviation of the beam from the centre of a track in the radial direction of the disk; and
tracking number counting means for counting, as a function of the TES, the number of tracks crossed by the optical head;
characterised in that the tracking number counting means comprises:
peak detection means for generating a positive peak pulse when the TES is higher than a predetermined positive level and for generating a negative pulse when the TES is lower than a predetermined negative level; and
logic means (500) for generating an output pulse in response to the positive peak pulse and the negative peak pulse being generated in a predetermined sequence.

2. Apparatus as claimed in claim 1 wherein the logic means (500) generates the output pulse in response to the positive peak pulse and the negative peak pulse being generated alternately.

3. Apparatus as claimed in claim 2, wherein the peak detection means comprises a positive peak level comparator (401), a negative peak level comparator (402), and a filter circuit (400) connected to the positive peak level comparator and the negative peak level comparator, the filter circuit passing the TES to the positive peak level comparator and the negative peak level comparator with a higher gain at higher frequencies and a lower gain at lower frequencies, the positive peak level comparator generating the positive peak pulse when the TES passed by the filter is higher than the predetermined positive level, and the negative peak level comparator generating the negative peak pulse when the TES passed by the filter is lower than a predetermined negative level.

4. Apparatus as claimed in claim 2 wherein the peak detection means comprises: a first positive peak level comparator (421) for generating a positive peak pulse when the TES is higher than a first predetermined positive level; a first negative peak level comparator (422) for generating a negative peak pulse when the TES is lower than a first predetermined negative level; a second positive peak level comparator (431) for generating a positive peak pulse when the TES is higher than a second predetermined positive level lower than the first predetermined positive level; a second negative peak level comparator (432) for generating a negative peak pulse when the TES is lower than a second predetermined negative level higher than the first predetermined negative level; the logic means (500) generating the output pulse in response to the positive peak pulse and the negative peak pulse being alternately generated by the first positive peak level comparator (421) and the first negative peak level comparator (422) respectively during a low-velocity seek operation and for generating the output pulse when the positive peak pulse and the negative peak pulse have been alternately generated by the second positive peak level comparator (431) and the second negative peak level comparator (432) respectively during a high-velocity seek operation.

5. Apparatus as claimed in any claim preceding claim 4 wherein the peak detection means comprises a window comparator (300) for generating a zero cross pulse when the TES is within a predetermined range including a zero level, the logic means (500) generating the output pulse in response to the zero cross pulse, the positive peak pulse, and the negative peak pulse being generated in a predetermined sequence.

6. Apparatus as claimed in claim 5 wherein the logic means (500) generates the output pulse in response to the positive peak pulse and the negative peak pulse being alternately generated during a low-velocity seek operation, and generates the output pulse in response to a zero cross pulse being generated during a high-velocity seek operation.

7. A method for counting the number of tracks on an optical disk when a laser beam is moving from a current track to a target track on the recording surface of the optical disk, the method comprising: generating a tracking error signal (TES) which indicates a deviation of the laser beam from the centre of a track in the radial direction of the disk,
generating a positive peak pulse when the TES is higher than a predetermined positive level,
generating a negative peak pulse when the TES is lower than a predetermined negative level, and
generating a signal which indicates that the laser beam is crossing a track when the positive peak pulse and the negative peak pulse have been alternately generated.

8. A method as claimed in claim 7 comprising:
passing the TES of high frequency with high gain and the TES of low frequency with low gain.

9. A method as claimed in claim 7 or claim 8 comprising:
generating a zero cross pulse when the TES is within a predetermined range including a zero level, and
generating a signal which indicates that the laser beam is crossing a track when the all or a part of the zero cross pulse, the positive peak pulse, and the negative peak pulse used according to a seek velocity have been generated in a predetermined order.

## Patentansprüche

1. Eine optische Scheibenlaufwerksvorrichtung, die umfaßt:
einen optischen Kopf zum Projizieren eines Laserstrahls auf die Aufzeichnungsoberfläche einer optischen Scheibe, die mit der Vorrichtung kompatibel ist;
ein Positionierungssteuerungsmittel (90) zum Bewegen des Strahls von einer aktuellen Spur auf der Scheibe auf eine Zielspur;
ein Spurführungsfehlersignalerzeugungsmittel (72) zum Erzeugen eines Spurführungsfehlersignals (TES), wobei das TES die Abweichung des Strahls von der Mitte einer Spur in radialer Richtung der Scheibe anzeigt; und
ein Spurenzählmittel zum Zählen der Anzahl der Spuren, die von dem optischen Kopf überquert wurden, als Funktion des TES;
dadurch gekennzeichnet, daß das Spurenzählmittel umfaßt:
ein Spitzenerkennungsmittel zur Erzeugung eines Positivspitzenimpulses, wenn das TES höher als ein vorbestimmter positiver Pegel ist, und zur Erzeugung eines Negativspitzenimpulses, wenn das TES niedriger als ein vorbestimmter negativer Pegel ist; und
ein Logikmittel (500) zur Erzeugung eines Ausgangsimpulses, wenn der Positivspitzenimpuls und der Negativspitzenimpuls in einer vorbestimmten Reihenfolge erzeugt werden.

2. Ein Gerät nach Anspruch 1, bei dem das Logikmittel (500) den Ausgangsimpuls erzeugt, wenn der Positivspitzenimpuls und der Negativspitzenimpuls abwechselnd erzeugt werden.

3. Ein Gerät nach Anspruch 2, bei dem das Spitzenerkennungsmittel umfaßt: einen Positivspitzenpegelkomparator (401), einen Negativspitzenpegelkomparator (402) und einen Filterschaltkreis (400), der mit dem Positivspitzenpegelkomparator und dem Negativspitzenpegelkomparator verbunden ist, wobei der Filterschaltkreis das TES bei höheren Frequenzen mit größerer Verstärkung und bei niedrigeren Frequenzen mit geringerer Verstärkung an den Positivspitzenpegelkomparator und den Negativspitzenpegelkomparator weiterleitet, der Positivspitzenpegelkomparator den Positivspitzenimpuls erzeugt, wenn das von dem Filter weitergeleitete TES höher als der vorbestimmte Wert ist, und der Negativspitzenpegelkomparator den Negativspitzenimpuls erzeugt, wenn das von dem Filter weitergeleitete TES niedriger als ein vorbestimmter Wert ist.

4. Ein Gerät nach Anspruch 2, bei dem das Spitzenerkennungsmittel umfaßt: einen ersten Positivspitzenpegelkomparator (421), der einen Positivspitzenimpuls erzeugt, wenn das TES höher ist als ein erster vorbestimmter positiver Pegel; einen ersten Negativspitzenpegelkomparator (422), der einen Negativspitzenimpuls erzeugt, wenn das TES niedriger ist als ein erster vorbestimmter negativer Pegel; einen zweiten Positivspitzenpegelkomparator (431), der einen Positivspitzenimpuls erzeugt, wenn das TES höher ist als ein zweiter vorbestimmter positiver Pegel, der niedriger als der erste vorbestimmte positive Pegel ist, und einen zweiten Negativspitzenpegelkomparator (432), der einen Negativspitzenimpuls erzeugt, wenn das TES niedriger ist als ein zweiter vorbestimmter negativer Pegel, der höher als der erste vorbestimmte negative Pegel ist; und ein Logikmittel (500), das den Ausgangsimpuls erzeugt, wenn der Positivspitzenimpuls und der Negativspitzenimpuls während einer langsamen Positionierungsoperation abwechselnd von dem ersten Positivspitzenpegelkomparator (421) und dem ersten Negativspitzenpegelkomparator (422) erzeugt werden, und das den Ausgangsimpuls erzeugt, wenn der Positivspitzenimpuls und der Negativspitzenimpuls während einer schnellen Positionierungsoperation abwechselnd von dem zweiten Positivspitzenpegelkomparator (431) und dem zweiten Negativspitzenpegelkomparator (432) erzeugt wurden.

5. Ein Gerät nach einem beliebigen Anspruch vor Anspruch 4, bei dem das Spitzenerkennungsmittel umfaßt: einen Fensterkomparator (300), der einen Nulldurchgangsimpuls erzeugt, wenn sich das TES innerhalb eines vorbestimmten Bereichs befindet, der einen Nullpegel einschließt, und ein Logikmittel (500), das den Ausgangsimpuls erzeugt, wenn der Nulldurchgangsimpuls, der Positivspitzenimpuls und der Negativspitzenimpuls in einer vorbestimmten Reihenfolge erzeugt werden.

6. Ein Gerät nach Anspruch 5, bei dem das Logikmittel (500) den Ausgangsimpuls erzeugt, wenn während einer langsamen Positionierungsoperation der Positivspitzenimpuls und der Negativspitzenimpuls abwechselnd erzeugt werden, und den Ausgangsimpuls erzeugt, wenn während einer schnellen Positionierungsoperation ein Nulldurchgangsimpuls erzeugt wird.

7. Ein Verfahren zum Zählen der Anzahl von Spuren auf einer optischen Scheibe, wenn ein Laserstrahl sich von einer aktuellen Spur zu einer Zielspur auf der Aufzeichnungsoberfläche der optischen Scheibe bewegt, wobei das Verfahren umfaßt:
Erzeugen eines Spurführungsfehlersignals (TES), das die Abweichung des Laserstrahls von der Mitte einer Spur in radialer Richtung der Scheibe anzeigt,
Erzeugen eines Positivspitzenimpulses, wenn das TES höher als ein vorbestimmter positiver Pegel ist,
Erzeugen eines Negativspitzenimpulses, wenn das TES niedriger als ein vorbestimmter negativer Pegel ist, und
Erzeugen eines Signals, das anzeigt, daß der Laserstrahl eine Spur überquert, wenn der Positivspitzenimpuls und der Negativspitzenimpuls abwechselnd erzeugt wurden.

8. Ein Verfahren nach Anspruch 7, das umfaßt:
Weiterleiten des hochfrequenten TES mit hoher Verstärkung und des niederfrequenten TES mit geringer Verstärkung.

9. Ein Verfahren nach Anspruch 7 oder 8, das umfaßt:
Erzeugen eines Nulldurchgangsimpulses, wenn sich das TES innerhalb eines vorbestimmten Bereichs befindet, der einen Nullpegel einschließt, und
Erzeugen eines Signals, das anzeigt, daß der Laserstrahl eine Spur überquert, wenn der Nulldurchgangsimpuls, der Positivspitzenimpuls und der Negativspitzenimpuls, die entsprechend der Positionierungsgeschwindigkeit verwendet wurden, alle oder teilweise in einer vorbestimmten Reihenfolge erzeugt wurden.

## Revendications

1. Appareil lecteur de disque optique comprenant :
une tête optique pour projeter un faisceau laser sur la surface d'enregistrement d'un disque optique compatible avec l'appareil ;
un élément de commande de recherche (90) pour déplacer le faisceau entre une piste courante sur le disque et une piste cible ;
une élément générateur de signaux d'erreur de piste (72) pour générer un signal d'erreur de piste (TES), le signal TES indiquant la déviation du faisceau par rapport au centre d'une piste dans la direction radiale du disque ; et
un dispositif de comptage du nombre de pistes pour compter, en fonction du signal TES, le nombre de pistes traversées par la tête optique ;
caractérisé en ce que le dispositif de comptage du nombre de pistes comprend :
un détecteur de crêtes pour générer une impulsion de crête positive lorsque le signal TES est supérieur à un niveau positif prédéterminé, et pour générer une impulsion de crête négative lorsque le signal TES est inférieur à un niveau négatif prédéterminé ; et
un élément logique (500) pour générer une impulsion de sortie en réponse à la génération dans un ordre prédéterminé de l'impulsion de crête positive et de l'impulsion de crête négative.

2. Appareil selon la revendication 1, dans lequel l'élément logique (500) génère l'impulsion de sortie en réponse à la génération en alternance de l'impulsion de crête positive et de l'impulsion de crête négative.

3. Appareil selon la revendication 2, dans lequel le détecteur de crêtes est composé d'un comparateur de niveaux de crête positifs (401), d'un comparateur de niveaux de crête négatifs (402) et d'un circuit de filtrage (400) connecté au comparateur de niveaux de crête positifs et au comparateur de niveaux de crête négatifs, le circuit de filtrage transmettant le signal TES au comparateur de niveaux de crête positifs et au comparateur de niveaux de crête négatifs avec un grand gain à des fréquences élevées et un gain plus faible à des fréquences plus basses, le comparateur de niveaux de crête positifs générant l'impulsion de crête positive lorsque le signal TES transmis par le filtre est de niveau supérieur à un niveau positif prédéterminé, et le comparateur de niveaux de crête négatifs générant l'impulsion de crête négative lorsque le signal TES transmis par le filtre est de niveau inférieur à un niveau négatif prédéterminé.

4. Appareil selon la revendication 2, dans lequel le détecteur de crêtes comprend : un premier comparateur de niveaux de crête positifs (421) pour générer une impulsion de crête positive lorsque le signal TES est de niveau supérieur à un premier niveau positif prédéterminé ; un premier comparateur de niveaux de crête négatifs (422) pour générer une impulsion de crête négative lorsque le signal TES est de niveau inférieur à un premier niveau négatif prédéterminé ; un deuxième comparateur de niveaux de crête positifs (431) pour générer une impulsion de crête positive lorsque le signal TES est de niveau supérieur à un deuxième niveau positif prédéterminé inférieur au premier niveau positif prédéterminé ; un deuxième comparateur de niveaux de crête négatifs (432) pour générer une impulsion de crête négative lorsque le signal TES est de niveau inférieur à un deuxième niveau négatif prédéterminé supérieur au premier niveau négatif prédéterminé ; l'élément logique (500) générant l'impulsion de sortie en réponse à la génération en alternance de l'impulsion de crête positive et de l'impulsion de crête négative par le premier comparateur de niveaux de crête positifs (421) et le premier comparateur de niveaux de crête négatifs (422), respectivement, au cours d'une opération de recherche à basse vitesse, et générant l'impulsion de sortie lorsque l'impulsion de crête positive et l'impulsion de crête négative ont été générées alternativement par le deuxième comparateur de niveaux de crête positifs (431) et le deuxième comparateur de niveaux de crête négatifs (432), respectivement, au cours d'une opération de recherche à grande vitesse.

5. Appareil selon l'une quelconque des revendications précédant la revendication 4, dans lequel le détecteur de crêtes est composé d'un comparateur à fenêtre (300) pour générer une impulsion de passage par zéro lorsque le signal TES est dans une plage prédéterminée incluant un niveau zéro, l'élément logique (500) générant l'impulsion de sortie en réponse à la génération dans un ordre prédéterminé de l'impulsion de passage par zéro, de l'impulsion de crête positive et de l'impulsion de crête négative.

6. Appareil selon la revendication 5, dans lequel l'élément logique (500) génère l'impulsion de sortie en réponse à la génération en alternance de l'impulsion de crête positive et de l'impulsion de crête négative au cours d'une opération de recherche à basse vitesse, et génère l'impulsion de sortie en réponse à la génération d'une impulsion de passage par zéro au cours d'une opération de recherche à grande vitesse.

7. Procédé pour compter le nombre de pistes sur un disque optique lorsqu'un faisceau laser se déplace entre une piste courante et une piste cible à la surface d'enregistrement du disque optique, ledit procédé comprenant les étapes consistant à :
générer un signal d'erreur de piste (TES) qui indique une déviation du faisceau laser par rapport au centre d'une piste dans la direction radiale du disque ;
générer une impulsion de crête positive lorsque le signal TES est supérieur à un niveau positif prédéterminé ;
générer une impulsion de crête négative lorsque le signal TES est inférieur à un niveau négatif prédéterminé ; et
générer un signal qui indique que le faisceau laser est en train de traverser une piste lorsque l'impulsion de crête positive et l'impulsion de crête négative ont été générées alternativement.

8. Procédé selon la revendication 7 comprenant les étapes consistant à :
transmettre le signal TES de fréquence élevée avec un grand gain et le signal TES de fréquence basse avec un gain faible.

9. Procédé selon la revendication 7 ou 8 comprenant les étapes consistant à :
générer une impulsion de passage par zéro lorsque le signal TES est dans une plage prédéterminée incluant un niveau zéro, et
générer un signal qui indique que le faisceau laser est en train de traverser une piste lorsque tout ou partie de l'impulsion de passage par zéro, de l'impulsion de crête positive et de l'impulsion de crête négative utilisées selon une vitesse de recherche ont été générées dans un ordre prédéterminé.
